# EUROPEAN PATENT SPECIFICATION

(11) **EP 1 424 268 B1**
(45) Date of publication and mention of the grant of the patent: **24.05.2006**
(21) Application number: 03026205.9
(22) Date of filing: 14.11.2003
(51) Int. Cl.: B62D 65/00

(54) **Modular system for handling motor vehicle bodies**
Modulares System zum Handhaben von Kraftfahrzeug-Karosserien
Système modulaire pour la manutention de caisses de véhicule automobile

(30) Priority: 28.11.2002 IT MI20022525
(43) Date of publication of application: 02.06.2004
(73) Proprietor: GEICO S.p.A., I-20092 Cinisello Balsamo, Milano (IT)
(72) Inventor: Tagliavento, Mauro, 20092 Cinisello Balsamo (Milano) (IT)
(74) Representative: Cicogna, Franco

(56) References cited:
- EP-A- 0 255 620
- EP-A- 0 850 856
- DE-A- 4 007 707
- US-B1- 6 415 721

## Description

The present invention relates to a modular system for handling, in particular, motor vehicle bodyworks or other articles of manufacture.

This system has been specifically designed for use in areas in which several types of articles of manufacture are assembled and coated or painted.

As is known, in a lot of industrial applications and, in particular, in the car field, it is necessary to provide assembling lines for handling articles to be processed, such as, for example, motor vehicle bodyworks, which can be conveyed to several processing stations.

Present approaches provide to use processing and assembling lines comprising a plurality of fixed equipments which are specifically preset, but which, however, do not allow to easily modify the processing line by simple means, since any modifications would require a full changing of the overall transfer or conveying line, with a consequent great increase of costs and processing difficulties.

Conventional systems for handling motor vehicle bodyworks and articles of manufacture in general provide to use mono- or dual-rail systems, including parallel chains or conveyor belts or the like.

This prior systems are very complex construction-wise and from a mere economic assembling standpoint.

Moreover, they have a comparatively large size. The document EP 0 850 856 discloses a conveyor system for handling load support in pallets which are designed for loads different from vehicle bodywork

### SUMMARY OF THE INVENTION

Accordingly, the aim of the present invention is to overcome the above mentioned problems, by providing a modular system for handling, in particular, motor vehicle bodyworks and the like, which can be installed in a very simple manner, while allowing to be easily and quickly modified, by merely adding or removing already preset components.

Within the scope of the above mentioned aim, a main object of the present invention is to provide such a modular system which can be easily accessed for cleaning and maintenance operations, in particular at the region thereof arranged under the skid or slide assembly.

Such an advantage would be particularly important in the case in which the system is used inside coating or painting cabs or ovens, or in washing and spraying tunnel arrangements.

Yet another object of the present invention is to provide such a modular system which is very simple construction-wise and has a very reduced size.

Yet another object of the present invention is to provide such a modular system which allows to easily assemble therein handling robots and apparatus as conventionally required in industrial coating and painting systems.

Yet another object of the present invention is to provide such a modular system which affords the possibility of using conventional processing and spraying guns and nozzles.

Yet another object of the present invention is to provide such a modular system which can be easily subjected to maintenance operations, such as, in particular, cleaning and servicing operations.

Yet another object of the present invention is to provide such a modular system which can be easily fitted to a lot of different processing or handling apparatus, while allowing to greatly reduce the operating cost.

Yet another object of the present invention is to provide such a modular system which is very reliable and safe in operation.

Yet another object of the present invention is to provide such a modular system, specifically designed for handling motor vehicle bodyworks and the like, which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a modular system for handling motor vehicle bodyworks and the like, characterized in that said modular system comprises a drive module having a central frame coupled to cross frames, said central frame including motion transmission mechanisms driven by an outer gear motor unit and coupled to cross shafts supported by said cross frames and driving a plurality of wheels for driving in turn motor vehicle bodyworks conveying skids.

### BRIEF DESCRIPTION OF THE DRAWINGS

Further characteristics and advantages of the present invention will become more apparent hereinafter from the following detailed disclosure of a preferred, though not exclusive, embodiment of a modular system for handling motor vehicle bodyworks and the like, which is illustrated, by way of an indicative, but not limitative, example, in the accompanying drawings, where:

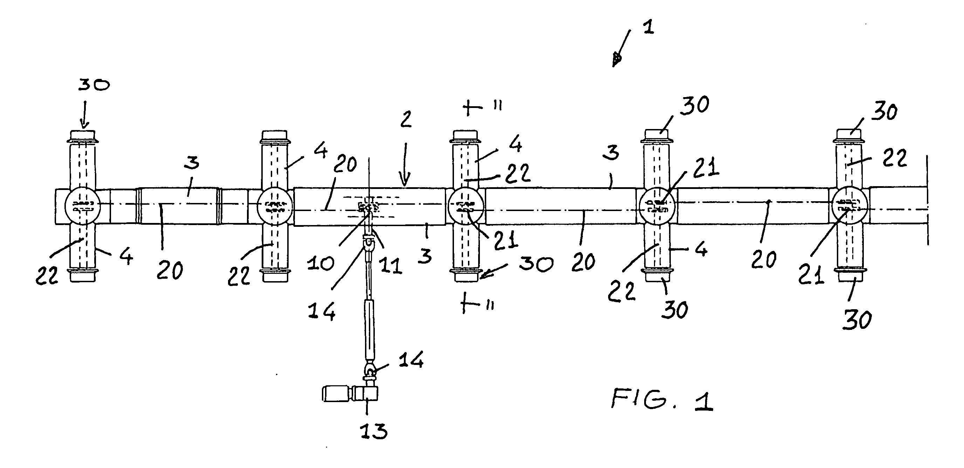

Figure 1 is a schematic view illustrating the modular system according to the present invention, as seen from the top;

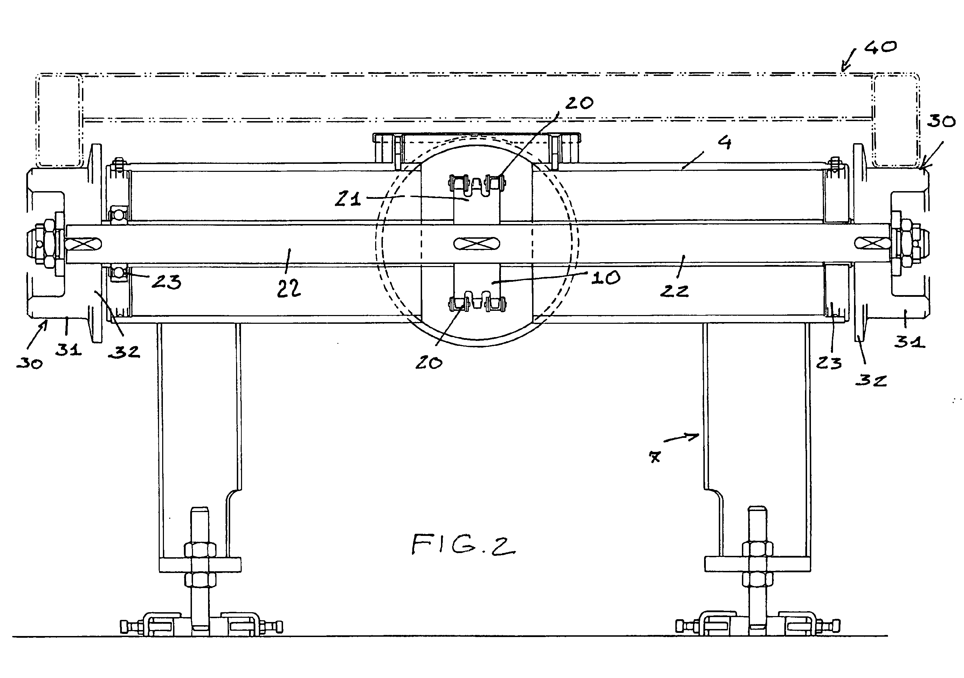

Figure 2 is a cross-sectional view substantially taken along the line II-II of figure 1;

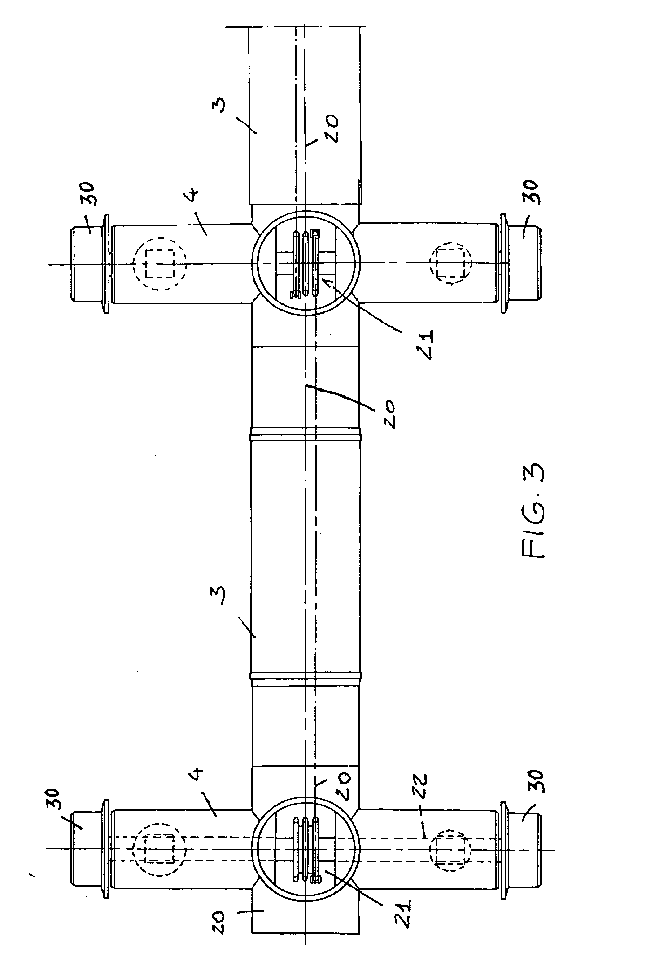

Figure 3, is a schematic view illustrating an additional module included in the modular system according to the invention; and

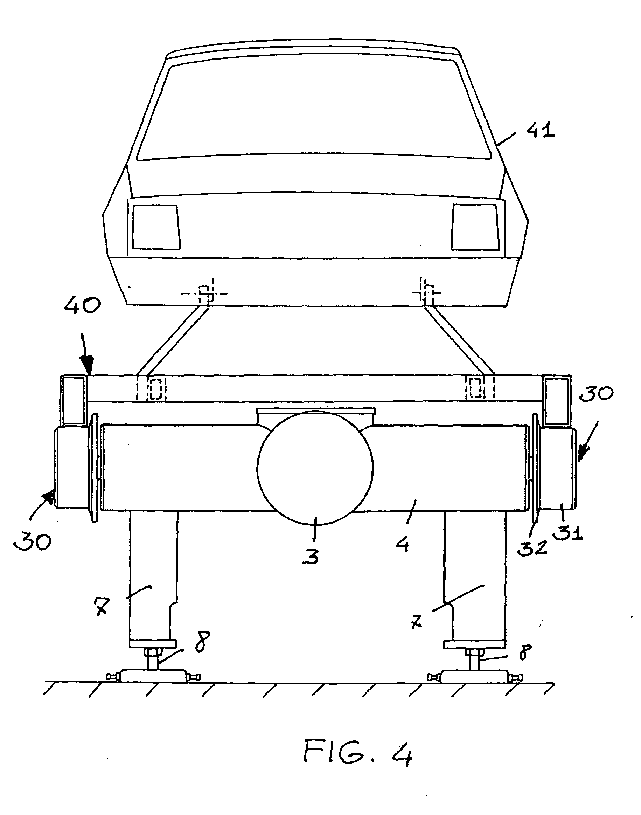

Figure 4 is a cross-sectional view illustrating the subject modular system and, in particular, clearly showing a motor vehicle bodywork being handled/processed.

### DESCRIPTION OF THE PREFERRED EMBODIMENTS

With reference to the number references of the above mentioned figures, the modular system for handling, in particular, motor vehicle bodyworks and the like, according to the present invention, which has been generally indicated by the reference number 1, comprises a drive module 2 which is substantially constituted by a central frame 3, of tubular configuration, which is connected, at the end portions thereof, to cross frames 4, which extend substantially perpendicular with respect to the central frame 3.

The central frame 3 includes therein motion transmission mechanisms, which substantially comprise a central pinion or driving pinion 10, which is keyed on a driveshaft 11 projecting from the central frame 2 and coupled to a gear motor unit 13, through cardanic couplings 14.

More specifically, the driven pinion 10 drives a pair of chains 20, entrained on transmission pinions 21, which are in turn keyed on cross shafts 22, housed in said cross frames 4 and which are rotatable supported by bearings 23 located at the end portions of said cross frames 4.

In particular, said chains 20 are arranged on said transmission pinions 21 with an offset relationship, thereby it will be possible to easily drive the following cross shafts which, accordingly, will be synchronously driven.

Each cross shaft 22 supports, at the end portions thereof, drive wheels 30, including a wheel body 31 and a wheel flange 32, arranged for supporting and driving skid or slide assemblies 40, provided for supporting a motor vehicle bodywork 41, to be processed.

The above disclosed driving mechanism which, in actual practice, is based on the use of transmission chains, allows to quickly and easily assemble and modify the modular system, by using additional modules, thereby providing a processing line having any desired size and configuration.

Each modular unit constituting the subject modular system, in particular, comprises a ground bearing framework, generally indicated by the reference number 7, including height adjusting means, comprising a plurality of threaded pin elements 8.

From the above disclosure it should be apparent that the invention fully achieves the intended aim and objects.

In particular, the invention provides a modular system, which is very simple and flexible construction-wise, since in said system a single geared motor unit allows to drive a processing line having a comparatively great length, and the length of said processing line can be easily modified.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes can be any, depending on requirements.

## Claims

1. A modular system (1) for handling motor vehicle bodyworks and the like, **characterized in that** said modular system comprises a drive module (2) having a central frame (3) coupled to cross frames (4), said central frame (3) including motion transmission mechanisms (10, 11, 13, 14) driven by an outer gear motor unit and coupled to cross shafts supported by said cross frames (4) and driving a plurality of wheels for driving in turn motor vehicle bodyworks conveying skids.

2. A modular system, according to the preceding claim, **characterized in that** said modular system (1) comprises additional modular units which can be coupled to the drive module (2) and to one another.

3. A modular system, according to the preceding claims, **characterized in that** the motion transmission mechanisms comprise a central pinion (10) keyed on a shaft (11) coupled to said outer gear motor (13) and driving a pair of chains (20) entrained on transmission pinions (21) keyed on cross shafts (22).

4. A modular system, according to one or more of the preceding claims, **characterized in that** said cross shafts (22) are rotatably supported by bearings (23) arranged at end portions of said cross frames (4), said cross shafts (22) supporting each at end portions thereof corresponding drive wheels (30).

5. A modular system, according to claim 4, **characterized in that** said drive wheels (30) have a wheel body (31) having an end flange arrangement.

6. A modular system, according to one or more of the preceding claims, **characterized in that** said outer geared motor (13) is coupled to the shaft (11) supporting said central pinion (10) through cardanic couplings (14).

7. A modular system, according to claim 3, **characterized in that** said chains (20) are offset from one another, for synchronously driving the cross shafts (22) of an adjoining additional modular unit.

## Patentansprüche

1. Modulares System (1) zum Handhaben von Kraftfahrzeug-Karosserien und Ähnlichem, **dadurch gekennzeichnet, dass** das modulare System ein Antriebsmodul (2) umfasst, welches einen zentralen Rahmen (3) aufweist, der mit Querrahmen (4) gekuppelt ist, wobei der zentrale Rahmen (3) Bewegungsübertragungsmechanismen (10, 11, 13, 14) umfasst, die durch eine äußere GetriebeMotor-Einheit angetrieben und mit den Querwellen, die durch die Querrahmen (4) getragen werden, gekuppelt werden und die eine Mehrzahl von Rädern antreiben, die ihrerseits Kraftfahrzeug-Karosserien befördernde Gestelle antreiben.

2. Modulares System gemäß dem vorangehenden Anspruch, **dadurch gekennzeichnet, dass** das modulare System (1) zusätzliche modulare Einheiten umfasst, welche mit dem Antriebsmodul (2) und miteinander gekuppelt werden können.

3. Modulares System gemäß den vorangehenden Ansprüchen, **dadurch gekennzeichnet, dass** die Bewegungsübertragungsmechanismen ein zentrales Ritzel (10) umfassen, welches auf einer Welle (11) verkeilt ist, die mit dem äußeren Getriebemotor (13) gekuppelt ist, und welches ein Paar Ketten (20) antreibt, welche über Übertragungsritzel (21) laufen, die auf Querwellen (22) verkeilt sind.

4. Modulares System gemäß einem oder mehreren der vorangehenden Ansprüche, **dadurch gekennzeichnet, dass** die Querwellen (22) drehbar durch Lager (23) getragen werden, die an Endabschnitten der Querrahmen (4) angeordnet sind, wobei jede der Querwellen (22) an ihren Endabschnitten entsprechende Antriebsräder (30) trägt.

5. Modulares System gemäß Anspruch 4, **dadurch gekennzeichnet, dass** die Antriebswellen (30) einen Radkörper (31) aufweisen, welcher eine Endflanschanordnung aufweist.

6. Modulares System gemäß einem oder mehreren der vorangehenden Ansprüche, **dadurch gekennzeichnet, dass** der äußere Getriebemotor (13) mit der Welle (11), welche das zentrale Ritzel (10) trägt, durch eine Gelenkkupplung (14) gekuppelt ist.

7. Modulares System gemäß Anspruch 3, **dadurch gekennzeichnet, dass** die Ketten (20) zueinander versetzt sind, um synchron die Querwellen (22) einer benachbarten zusätzlichen modularen Einheit anzutreiben.

## Revendications

1. Système modulaire (1) pour traiter les carrosseries de véhicules automobiles et analogues, **caractérisé en ce que** ledit système modulaire comprend un module de commande (2) comprenant un cadre central (3) raccordé à des cadres transversaux (4), ledit cadre central (3) comprenant des mécanismes de transmission de mouvement (10, 11, 13, 14) commandés par une unité extérieure de motoréducteur et couplés aux arbres transversaux supportés par lesdits cadres transversaux (4) et commandant une pluralité de roues pour commander à leur tour des patins de manutention de carrosserie automobile.

2. Système modulaire selon la revendication qui précède, **caractérisé en ce que** ledit système modulaire (1) comprend des unités modulaires supplémentaires qui peuvent être couplées au module de commande (2) et l'une à l'autre.

3. Système modulaire selon les revendications qui précèdent, **caractérisé en ce que** les mécanismes de transmission de mouvement comprennent un pignon central (10) claveté sur un arbre (11) couplé au dit motoréducteur extérieur (13) et commandent une paire de chaînes (20) entraînées sur des pignons de transmission (21) clavetés sur les arbres transversaux (22).

4. Système modulaire selon une ou plusieurs des revendications qui précèdent, **caractérisé en ce que** lesdits arbres transversaux (22) sont supportés en rotation par des paliers (23) disposés à des parties d'extrémité desdits cadres transversaux (4), lesdits arbres transversaux (22) supportant chacun à leurs parties d'extrémité des roues motrices (30) correspondantes.

5. Système modulaire selon la revendication 4, **caractérisé en ce que** lesdites roues motrices (30) comprennent un corps de roue (31) comprenant un arrangement de bride d'extrémité.

6. Système modulaire selon une ou plusieurs des revendications qui précèdent, **caractérisé en ce que** ledit motoréducteur extérieur (13) est couplé à l'arbre (11) supportant ledit pignon central (10) au travers d'accouplements à cardan (14).

7. Système modulaire selon la revendication 3, **caractérisé en ce que** lesdites chaînes (20) sont décalées l'une de l'autre, pour entraîner de façon synchrone les arbres transversaux (22) d'une unité modulaire supplémentaire jointe.
